# EUROPEAN PATENT SPECIFICATION

(11) **EP 2 323 838 B1**
(45) Date of publication and mention of the grant of the patent: **11.11.2020**
(21) Application number: 08821886.2
(22) Date of filing: 10.09.2008
(51) Int. Cl.: B29C 73/10, B29C 73/26

(54) **INTEGRATED REINFORCEMENT PATCH**
INTEGRIERTER VERSTÄRKUNGSFLICKEN
PASTILLE DE RENFORCEMENT INTÉGRÉ

(43) Date of publication of application: 25.05.2011
(73) Proprietor: Compagnie Générale des Etablissements Michelin, 63000 Clermont-Ferrand (FR)
(72) Inventor: COLBY, E., Bruce, Greenville South Carolina 29607 (US); PANNING, Nathan, J., Simpsonville South Carolina 29681 (US); ZARAK, Cesar, Simpsonville South Carolina 29681 (US)
(74) Representative: Dossmann, Gérard
(86) International application number: PCT/US2008/075860
(87) International publication number: WO 2010/030273

(56) References cited:
- EP-A2- 0 279 901
- DE-B- 1 244 003
- NL-A- 9 302 004
- US-A- 1 591 817
- US-A- 3 448 784
- US-A- 4 385 651
- US-A- 4 923 543
- US-A- 6 026 878
- US-B1- 6 386 255

## Description

### BACKGROUND OF THE INVENTION

### Field of the Invention

This invention relates generally to tire repair patches and methods of repairing a damaged tire portion, and more specifically, to tire repair patches and methods of tire repair that facilitate more durable tire repairs. In particular the present invention relates to a method as it is for example known from NL 9 302 004 A.

### Description of the Related Art

It is commonly known to apply repair patches to a damaged portion of a tire. To facilitate such repairs, it is also customary to prepare the damaged area prior to application of any such patch by substantially removing the damaged portions of any tire reinforcements within the damaged area. Subsequently, the interior surface of a tire surrounding the damaged area, which is associated with an air-impermeable layer called an innerliner, may be cleaned and/or lightly buffed to promote adhesion between the tire and the patch. The patch is then applied to the prepared interior surface of the tire by way of an adhesive.

Current patches provide a substantial amount of rubber material interposed between the tire and the patch reinforcement layer (which contains patch reinforcements, such as cable or cord). The amount of interposed rubber material operates to isolate the patch reinforcements from the tire reinforcements. Patches commonly include polyester or nylon cord reinforcements, which are characterized by having a low tensile modulus, such as 2-4 gigapascals (GPa), and, as such, elongate *(i.e.,* stretch) more at any given tensile force than would be achieved by a higher modulus reinforcement. It is believed the amount of rubber interposed between the tire reinforcements and the patch reinforcements, as well as the use of low tensile modulus reinforcements prevents the patch from achieving improved repair and patch performance. The excess rubber provides an inefficiency with regard to the transfer shear forces between the damaged cords and the isolated patch reinforcements during tire operation. Further, the interposed rubber generally facilitates heat generation during tire operation. Still further, the use of patch reinforcements being characterized by lower tensile moduli may reduce the efficiency in the transferring shear force from the damaged tire cord to the patch reinforcements during tire operation. Accordingly, the following discloses an improved repair patch that at least improves upon the above-stated limitations.

### SUMMARY OF THE INVENTION

In order to overcome the above discussed disadvantages the present invention discloses a method according to claim 1. The dependent claims relate to advantageous embodiments.

Particular embodiments of the present invention include methods of forming a retreaded tire. Particular embodiments of such methods includes the step of buffing an interior surface of the tire about a perimeter of the damaged tire portion to form a patch receiving surface, the interior surface being buffed to a depth sufficient to place a reinforcement of a tire patch a distance of approximately 3 millimeters or less from a damaged tire reinforcement. Further steps may include covering the damaged portion by applying a pre-assembled patch to the patch receiving surface along the interior surface of the tire, the tire patch sized to cover the damaged portion, such patch including a reinforcement layer interposed between an air-impermeable layer and a tire-contacting surface of the patch, the patch reinforcement being contained within the reinforcement layer and being positioned approximately 3 millimeters or less from the damaged tire reinforcement. Yet another step may include curing the patch to the tire.

Particular embodiments of the present disclosure include a tire repair patch, the patch including an air-impermeable layer and a reinforcement layer having a plurality of reinforcements, each of the plurality of reinforcements characterized by having a high tensile modulus. The patch may also include a tire-contacting surface, the distance between a majority of the plurality of reinforcements and the contact surface being 3 mm or less.

The foregoing and other objects, features and advantages of the invention will be apparent from the following more detailed descriptions of particular embodiments of the invention, as illustrated in the accompanying drawings wherein like reference numbers represent like parts of the invention.

### BRIEF DESCRIPTION OF THE DRAWINGS

FIG. **1** is a partial isometric view of a damaged tire section, in accordance with an embodiment of the invention.
FIG. **2** is a partial cross-sectional view of a damaged portion of a tire taken along line **2-2** of FIG. **1****,** prepared for patch application in accordance with an embodiment of the present invention.
FIG. **3** is a sectional view of a tire patch, in accordance with an embodiment of the present invention.
FIG. **4** is a partial cross-sectional view of the damaged tire portion of FIG. **2** having been repaired by application of the patch of FIG. **3****,** in accordance with an embodiment of the present invention.
FIG. **5** is a top view of a portion the tire patch of FIG. **3****,** in which three of its layers are shown during assembly of the tire patch in accordance with an embodiment of the present invention.
FIG. **6** is a top view of a portion the tire patch of FIG. **5****,** showing the placement of side gum strips during assembly of the tire patch in accordance with an embodiment of the present invention.
FIG. **7** is a top view of a portion the tire patch of FIG. **6****,** showing the placement of end gum strips during assembly of the tire patch in accordance with an embodiment of the present invention.
FIG. **8** is a top view of a portion the tire patch of FIG. **7****,** showing the placement of an adhesive to complete assembly of the tire patch in accordance with an embodiment of the present invention.
FIG. **9** is a sectional view of a tire patch in accordance with an alternative embodiment of the present invention, which includes a second reinforcement layer positioned adjacent to the high modulus reinforcement layer.

### DETAILED DESCRIPTION OF PARTICULAR EMBODIMENTS

Particular embodiments of the present invention provide methods and apparatus for repairing a damaged tire section. As further described below, the inventors have discovered that by reducing the distance between reinforcements of a tire repair patch and the damaged reinforcements within a tire, and/or providing patch reinforcements being characterized by having a high tensile modulus, at least an approximately 50% improvement in tire durability has been achieved. This is a significant improvement to the repair tire durability.

Particular embodiments of such methods of repairing a damaged portion of a tire may include the step of preparing the damaged area for repair. Particular embodiments may include the step of forming a recess associated with the damaged tire portion, the opening including a plurality of endings associated with one or more damaged tire reinforcements. In still other embodiments, such methods may include the step of forming an opening associated with the damaged tire portion, the opening including a plurality of endings associated with one or more damaged tire reinforcements. When a tire is damaged, often one or more of the tire reinforcements are also damaged. Prior to repair, the damaged tire portion is prepared for repair. Such preparation may include removing at least a portion of the damage. This includes removing the damaged portion of any damaged tire reinforcement. Accordingly, in particular embodiments, the tire reinforcement is removed until the reinforcement reaches an undamaged portion of the tire. Any other damage may also be removed, which includes other reinforcements and rubber. Ultimately, preparation of the damaged portion may form a recess partially through a thickness of the tire, or an opening through a thickness of the tire. A recess may be formed when it is desirous to only repair a portion of a tire thickness. An opening may be formed when it is desirous to penetrate through the tire to repair the damaged area, such as along the sidewall or shoulder of the tire. Such opening may, in particular embodiments, be formed to expand as it extends toward the exterior of the tire to facilitate better implementation of a filler to the opening subsequent to application of the patch. Damage may occur along the tire sidewalls, or along the tire shoulder, which generally is located between the tire tread and sidewalls. Damage may also occur in the tread area. Because portions of the damaged reinforcements are removed to form the opening, endings of such reinforcements are located about the periphery of the opening.

Particular embodiments of such methods of repair may include, as preparation of the tire for repair, buffing an interior surface of the tire about a perimeter of the damaged tire portion to form a patch receiving surface, the interior surface being buffed to a depth sufficient to place a reinforcement of a tire patch a distance of approximately 3 millimeters or less from a damaged tire reinforcement. It is common to buff the innerliner along an interior surface of a tire, about the periphery of a damaged tire portion. Buffing, which may be achieved by any known tool, manually or automatically, cleans the interior tire surface while also roughing the surface for facilitating proper patch adhesion. The depth of such buff, according to the present invention, however, is more than superficial.

According to particular embodiments, the step of buffing includes buffing the innerliner, as well as other rubber, from the perimeter of the damaged area to form a patch-receiving surface having a depth for positioning the patch reinforcements in close proximity to the tire reinforcements of the damaged tire portion. This increases the efficiency and expediency of shear transfer from the tire reinforcements to the patch reinforcements. In other words, the closer the tire and patch reinforcements are positioned, shearing loads will be transferred quicker to the patch reinforcements, which reduces the shearing deformation between the tire and patch since less deformable rubber exists between the tire and patch reinforcements. Accordingly, the interior perimeter of the damaged area is buffed to a depth that allows the reinforcements of a particular patch to be positioned less than 5 mm from the tire reinforcements associated with the damaged tire portion. In particular embodiments, the buffed depth achieves a distance between tire and patch reinforcements of 3 mm or less. In yet other embodiments, the distance is 2 mm or less. In still other embodiments, the distance is 1 mm. It is contemplated that the buffed depth may be substantially zero, that is, the thickness of rubber over the tire reinforcements, which would therefore become at least partially exposed. Further, the buffed profile may gradually extend from the desired depth (closest to the damaged portion) to the unbuffed interior surface of the tire (furthest from the opening). The buffed profile may also be stepped *(i.e.,* non-gradual).

Particular embodiments of such methods includes covering the damaged portion by applying a pre-assembled patch to the patch receiving surface along the interior surface of the tire, the tire patch sized to cover the damaged portion. In particular embodiments, such patch includes a reinforcement layer interposed between an air-impermeable layer and a tire-contacting surface of the patch, the patch reinforcement being contained within the reinforcement layer and being positioned approximately 3 millimeters or less from the damaged tire reinforcement. In particular embodiments, the patch includes an adhesive layer interposed between the tire-contacting surface and the reinforcement layer, the adhesive layer forming a portion of the contacting surface. The adhesive layer may be at least partially uncured for facilitating attachment of the repair patch to the tire. In particular embodiments, the reinforcement and air-impermeable layers are pre-cured. Accordingly, a patch is provided that covers the damaged area of the tire. The patch is sized relative the damaged area such that the patch substantially engages the tire about the perimeter of the damaged area. In the present invention, the patch seals the damaged area to prevent air permeation, but also places patch reinforcements close to the patch tire contact surface for close association with the tire reinforcements upon patch installation. The patch, upon installation, may extend approximately 3 mm or less beyond the interior surface of the tire *(i.e.,* extending within the interior of the tire). In other embodiments, the patch may extend approximately 2 mm or less beyond the interior surface of the tire, and in other embodiments 1 mm or less. In yet other embodiments, the patch is approximately flush with the interior surface of the tire.

In particular embodiments, the patch includes an air-impermeable barrier layer, a reinforcement layer, and an adhesive layer. In such embodiments, the patch thickness is no more than approximately 4-6 mm thick. The barrier layer operates to prevent air permeation from the interior of the tire when pressurized, and may be formed by a butyl rubber, or any other material suitable for such purpose, as known by one of ordinary skill in the art. It is contemplated that the barrier layer may include any desired reinforcement, such as, for example, a nylon, polyester, rayon, or aramid cord, or steel cable. The adhesive layer may comprise any known rubber having adhesive properties in an uncured state, or at least a partially uncured state. In particular embodiments, the adhesive layer is 3 mm or less thick. In other embodiments, the adhesive layer is 1 mm or less thick. In yet other embodiments, the adhesive layer is approximately 0.5 mm or less thick. The adhesive layer, in an embodiment, is attached to the reinforcement layer.

The reinforcement layer generally includes reinforcements for accepting loads from a tire upon which the patch is attached. In particular embodiments, patch reinforcements are characterized by having a high tensile modulus, that is, reinforcements that deform to a lesser degree than other reinforcements when subjected to the same tensile force. A high tensile modulus is quantified as being approximately 8 gigapascals (GPa) or more. In other embodiments, a high tensile modulus reinforcement measures at least approximately 10 GPa. In yet other embodiments, a high tensile modulus reinforcement measures at least approximately 15 GPa, or 20 GPa, or 22 GPa. In particular embodiments, a high tensile modulus reinforcement comprises, for example, aramid or fiberglass cord, or steel cable; however, other reinforcements comprised of other materials, including hybrid materials, may be used.

Aramid cord, in particular embodiments, is characterized as having a tensile modulus of at least approximately 20 GPa, and in other embodiments at least 23 GPa. In still other embodiments, the aramid cord modulus is approximately 20-23 GPa. In a particular embodiment, an approximately 0.7 mm aramid cord reinforcement has a tensile modulus of approximately 22 GPa. Such aramid cord is also characterized as having an ultimate strength, which may typically be around 340 MPa, even though other strengths may be used. A layer containing aramid may include, in particular embodiments, at least an average of approximately 26 aramid cord reinforcements spaced across an inch of such layer (*i.e*., a minimum of approximately 26 ends per 2,54 cm), as measured in a direction normal to the lengthwise direction of such reinforcements.

Steel cable, in particular embodiments, is characterized as having a tensile modulus of approximately at least 120 GPa, and in other embodiments at least 180 GPa. In still other embodiments, the steel cable modulus is approximately 120-180 GPa. In a particular embodiment, an approximately 0.7 mm steel cable reinforcement has a tensile modulus of approximately 180 GPa. Such steel cable is also characterized as having an ultimate strength, which may typically be around 380 MPa, even though other strengths may be used. A layer containing steel reinforcements may include, in particular embodiments, at least an average of approximately 8-9 steel cord reinforcements spaced across an inch of such layer (*i.e*., a minimum of approximately 8-9 ends per 2.54 cm) as measured in a direction normal to the lengthwise direction of such reinforcements.

By providing a high tensile modulus reinforcement, the patch more expeditiously accepts tensile loads from the tire reinforcements, which is transferred through shear of the rubber between the patch reinforcements and the tire reinforcements. Otherwise, the patch reinforcements may excessively elongate during tire operation, which may facilitate flexing and heat generation. In particular embodiments, the reinforcement is coated with insulation rubber, and in certain embodiments, the insulation rubber provides an exterior coating of approximately 0.3-0.6 mm.

It follows, in particular embodiments, that the reinforcement layer can be characterized as a high tensile modulus reinforcement layer. In particular embodiments, the high modulus layer can be characterized as having a minimum effective tensile modulus. A minimum effective tensile modulus of the layer is directly related to the percent amount of reinforcement present within a cross-sectional area of the layer - which is associated with the reinforcement spacing or reinforcement ends per inch (2,54cm) within the layer. For example, the arrangement of reinforcements within a reinforcement layer or ply is commonly described as having a particular quantity of ends per inch (that is, an average quantity of reinforcements for each 2,54 cm width of the layer, as measured in a direction normal to the lengthwise direction of the reinforcements). By knowing the quantity of ends (or reinforcements) per inch, (2,54 cm) an average reinforcement spacing is also known. Accordingly, the percent amount of reinforcement material present within a cross-section of the layer, as being defined by the reinforcement spacing within the layer, is multiplied by the tensile modulus of such reinforcement material to determine a minimum effective tensile modulus for the layer. Because the reinforcement layer is comprised of both reinforcements and skim or insulation rubber, the layer comprises less than 100% of reinforcement material, and therefore, the effective tensile modulus of the layer is less than the modulus of the reinforcement material.

In one embodiment, the minimum effective tensile modulus can be determined by first determining a cross-sectional area of the reinforcement layer along the particular incremental spacing of reinforcements within the reinforcement layer, which may comprise, for example, the centerline to centerline spacing between adjacent reinforcements. A pre-determined cross-sectional area of the layer may be determined by multiplying the reinforcement height (*i*.*e*., thickness or diameter) by the reinforcement spacing within the pre-determined layer cross-sectional area. The percent amount of reinforcement contained within such cross-sectional area is equivalent to the total reinforcement cross-sectional area contained within the pre-determined area, divided by the pre-determined cross-sectional area of the layer. Now, the minimum effective tensile modulus for the reinforcement layer can be obtained by multiplying the percent amount of reinforcement by the tensile modulus of the reinforcement. Accordingly, the resulting effective tensile modulus will be less than that of the reinforcement material, since the tensile modulus of the insulation rubber interposed between the reinforcements is relatively negligible, and therefore, is not accounted for in this calculation.

By way of example, when the reinforcement layer includes 0.7 mm diameter aramid cord reinforcements having a tensile modulus of 20 GPa and being arranged within the layer at 28 ends per inch, the reinforcement spacing equals 1/28 inch or 0.9 mm, while the cross-sectional area of the cord (reinforcement) equals 0.38 mm² and the total area equals 0.7 mm x 0.9 mm, or 0.63 mm². It follows that the minimum effective tensile modulus for the layer is equivalent to approximately 12 GPa, which is obtained by multiplying the reinforcement tensile modulus of 20 GPa by the percent amount of cross-sectional area of patch reinforcement present within a particular reinforcement spacing (0.38 mm²/0.63 mm² = 0.61, or 61%). Accordingly, in particular embodiments, the high modulus reinforcement layer is characterized as having a minimum effective tensile modulus of approximately 5 GPa, and in other embodiments, by a minimum effective tensile modulus of approximately 6 GPa, 10 GPa, or 12 GPa.

In other embodiments, the patch includes a cover layer interposed between the barrier layer and the reinforcement layer. In still other embodiments, one or more gums strips may be positioned about the perimeter of the reinforcement layer to insulate the reinforcement layer from the environment and other portions of the tire. The patch is formed, in particular embodiments, by assembling the various layers of the patch without the adhesive layer, and curing the same. The uncured adhesive layer may then be applied to the patch subsequent the cure, or may be applied during the cure to partially cure the adhesive layer.

Subsequent application of the patch to the tire patch receiving area, particular embodiments of such methods include the step of applying a filler material to the opening along the exterior of the tire, and curing the patch to the tire. Patches are commonly cured to the host tire by various means known within the art, which may include, for example, placing the tire in an autoclave for curing, or locally curing the patch to the tire with a spot curing machine.

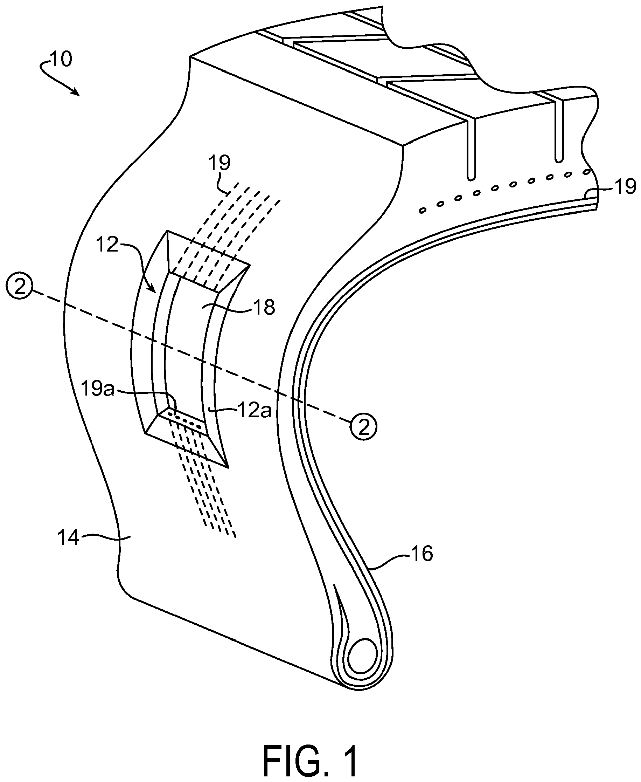

The methods described above will now be described and applied below with additional detail, in accordance with the exemplary embodiments shown in FIGS. 1-9. While the tire patch and repair methods are utilized to repair a tire sidewall in such FIGURES, it is contemplated that the patch may be used to repair damaged areas under the tread area of the tire.

With reference to FIG. **1****,** a tire **10** is shown having a damaged portion 12 in the tire sidewall, according to an exemplary embodiment. Tire damage that generally occurs along the sidewall or along the shoulder area *(i.e.,* the area between the tread edge and the sidewall) may be repaired; however, other damage may be repaired that occurs at other locations along the tire, along the tread area, which may require application of a tire repair patch along an interior tire surface below the tire belt or tread. The damaged portion (area) **12** may be prepared for repair by removing damaged material from the tire, such as damaged sections of any damaged reinforcement **19** and any other surrounding rubber and tissue, to form a repair recess or opening. In FIG. **1****,** an opening **18** is formed in association with damaged portion **12** along a sidewall of a tire. Opening **18** extends between exterior **14** and interior **16** surfaces, and includes a perimeter **12a** having tire reinforcement endings **19a.** In lieu of an opening **18,** a recess may be formed that only extends partially through a thickness of a tire **10.** Tire reinforcements **19** are also shown extending in a radial direction of the tire.

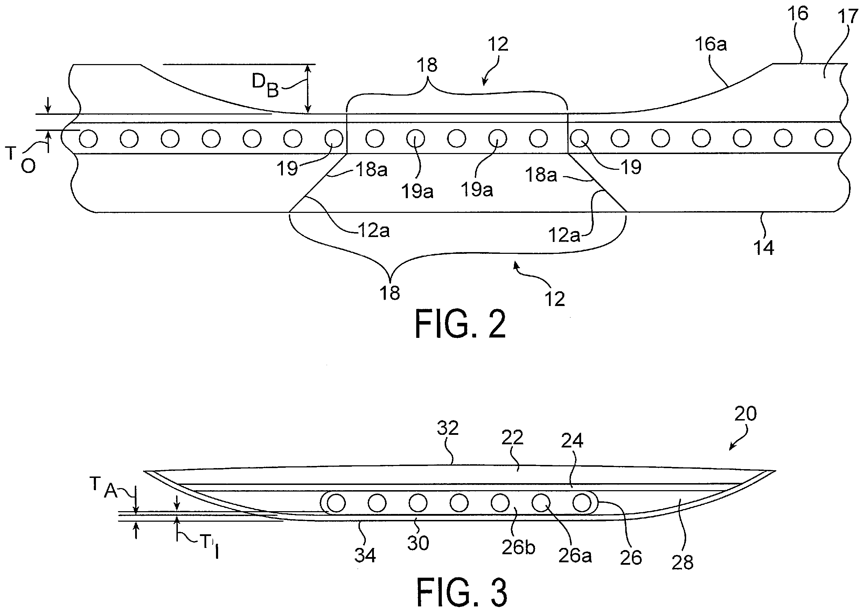

With reference to FIG. **2****, a** cross-section of a damaged tire portion is shown, which has been prepared for repair by forming an opening **18.** The exterior portion of opening **18** may be prepared for receiving a filler material **40.** In the embodiment shown, opening **18** is prepared to enlarge as it approaches exterior surface **14.** This is achieved by chamfering the perimeter **12a** of opening **18** to provide an angled, inclined, tapered, or rounded side surface **18a,** which facilitates improved attachment between a filler material **40** and the tire due to an increase in surface area. Accordingly, it is contemplated that the tapering of side surface **18a** may be achieved by any geometry. This may also reduce the trapping of air between filler **40** and patch **20.** If a recess is formed, in lieu of an opening, this step of forming and tapering a side surface **18a** is not performed, although filler may be placed within the recess prior to patch application, for the purpose of consuming any void existing below the patch receiving surface.

Along the interior of tire **10,** the interior surface **16** is buffed to provide a patch receiving surface **16a** about damaged tire portion **12,** which may comprise an opening **18** or a recess. This surface may be relatively rough to promote adhesion with patch **10.** In the exemplary embodiment shown, the receiving surface **16a** includes a gradual or smooth profile, which may be arcuate or linear in shape, extending between unbuffed interior surface **16** and the damages portion **12.** In other embodiments, however, the profile of patch-receiving surface **16a** may be abrupt, such as by having a stepped or square transition or edge. In the present embodiment, interior tire surface **16** is formed along an air-impermeable layer commonly referred to as an innerliner.

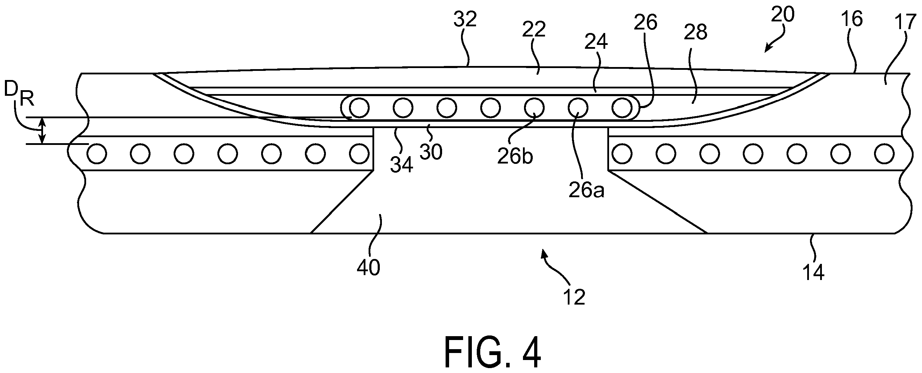

It is also shown that interior surface **16** has been buffed to a particular depth **D_{B}** to facilitate a close proximity between patch reinforcements **26a** and any tire reinforcement **19** associated with damaged portion **12.** This is provided to achieve a more durable tire repair. Depth **D_{B}** facilitates placement of patch reinforcements **26a** a distance **D_{R}** from any underlying tire reinforcements **19,** as shown in FIG. **4****.** In particular embodiments, distance **D_{R}** is equal to 3 mm or less, and in other embodiments, 2 mm or less, and in still other embodiments, 1 mm.

With reference to FIG. **4****,** after interior surface **16** has been buffed, patch **20** is placed along the interior tire surface **16,** and substantially within patch-receiving surface **16a.** A solvent, commonly referred to as cement, may be interposed between patch **20** and tire **10** to promote adhesion there between. Subsequent application of patch **20,** a filler material **40** is placed within the exterior portion of opening **18** to substantially fill opening **18.** As mentioned above, when forming a recess in lieu of an opening, a filler **40** may be applied to consume a portion of a recess prior to application of the patch **10.**

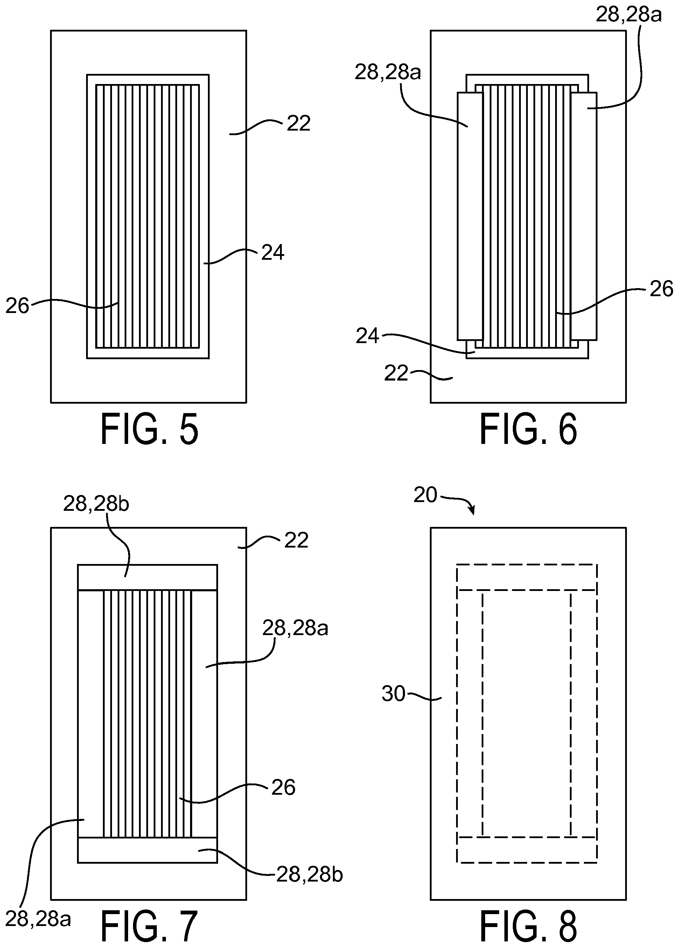

With reference to FIG. **3****,** a tire repair patch **20** is shown in an exemplary embodiment. Patch **20** provides a first surface **32** for association with the interior of tire **10**, and a second surface **34** of engaging damaged portion **12** of tire **10.** In the embodiment shown, patch **20** includes an air-impermeable barrier layer **22.** Barrier layer **22** may be formed of butyl rubber, or any other rubber or material capable of providing the desired impermeability as well as enough flexibility to function without tearing during tire operation. Rubber, as used in this application, refers to both natural and synthetic rubber compounds. A cover layer **24** may be interposed between reinforcement layer **26** and barrier layer **22,** as exemplarily shown in FIG. **6****,** for the purpose of facilitating attachment between reinforcement layer **26** and barrier layer **22.**

Reinforcement layer **26** generally comprises patch reinforcements **26a** coated with rubber insulation **26b.** In particular embodiments, patch reinforcements **26a** are characterized by having a high tensile modulus, that is, reinforcements that deform to less than other (lower tensile modulus) reinforcements when subjected to the same tensile force. A high tensile modulus may be quantified as being approximately 8 gigapascals (GPa) or more. In other embodiments, a high tensile modulus measures approximately 10 GPa or more. In yet other embodiments, a high tensile modulus measures approximately 15 GPa or more. In still other embodiments, a high tensile modulus measures approximately 20 GPa, or 22 GPa, or more.

In particular embodiments, high tensile modulus reinforcements comprise aramid or fiberglass cord, or steel cable. Particular embodiments of aramid and steel reinforcements are described above. High tensile modulus reinforcements **26a** used in reinforcement layer **26** may, however, be formed of any other materials having a high tensile modulus. Further, reinforcement layer **26** may include hybrid reinforcements formed of both high tensile modulus reinforcements or filaments and other non-high modulus reinforcements or filaments. For example, a high modulus reinforcement may include aramid (a high tensile modulus material) and nylon (a lower modulus material) reinforcements or filaments. In such example, a 0.7 mm aramid-nylon reinforcement **26a** has a tensile modulus of at least approximately 8-10 GPa. Other non-high tensile modulus materials include polyester. In still other embodiments, reinforcement layer **26** may be formed of both high and lower tensile modulus reinforcements. By providing high tensile modulus reinforcements, the patch more expeditiously accepts loads from the tire reinforcements by reducing deflections *(i.e.,* the elasticity) between the tire and patch.

Reinforcements **26a** of reinforcement layer **26** are generally distributed within the layer **26** as desired. Such distribution is commonly expressed or quantified as providing a quantity of endings (*i*.*e*., reinforcements) per inch, (2,54 cm) which means that for each inch (2,54 cm) of layer **26,** measured in a direction normal to the lengthwise direction of reinforcements **26a,** there are, on average, a specified number of reinforcements **26a.** As stated above, reinforcement layer **26** is formed of high tensile modulus reinforcements, such as aramid or steel. In particular embodiments, reinforcement layer **26** is formed of aramid reinforcements **26a** arranged to provide at least 20 ends per inch (2,54 cm) (*i*.*e*., the distribution of aramid reinforcements **26a** within layer **26** provide 20 or more : reinforcements per 2,54cm). In other embodiments, the aramid reinforcement layer **26** includes 26 or more ends per 2,54 cm. In yet other embodiments, aramid reinforcement layer **26** includes 26-30 ends per 2,54 cm.

In particular embodiments, reinforcement layer **26** may be described as being a high tensile modulus reinforcement layer. As described above, a high tensile modulus reinforcement layer **26** may be characterized as having a minimum effective tensile modulus. In particular embodiments, reinforcement layer **26** may be characterized as having a minimum effective tensile modulus of at least approximately 5 GPa. In other embodiments, the minimum effective tensile modulus of reinforcement layer **26** is at least approximately 6 GPa, 10 GPa, or 12 GPa.

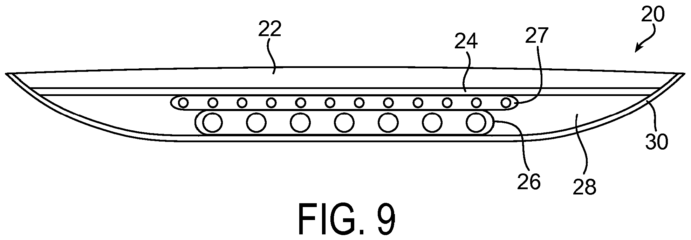

In particular embodiments, a second reinforcement layer **27** may be placed along the interior side of the high-modulus reinforcement layer, as exemplarily shown in FIG. **9****.** The reinforcements in the second layer 27 may comprise any type of reinforcement material, regardless of whether or not such reinforcement type is characterized as being a high tensile modulus material. In particular embodiments, such material may be nylon, polyester, or aramid. In such embodiments, the thickness of patch **20** may be 5-6 mm. In other embodiments, without inclusion of the second reinforcement layer **27,** a patch **20** may be 4-5 mm thick. In other embodiments, it is contemplated that a patch **20** may have a thickness less than 4 mm or greater that 6 mm.

When applying the patch **20** to a tire **10,** in a particular embodiment, the patch reinforcements **26a** are substantially parallel to the lengthwise orientation of the tire reinforcements **19.** Further, in particular embodiments, patch **20** applied to the tire **10** such that lengthwise direction of patch reinforcements **26a** extends in substantially the same direction as the lengthwise direction of tire reinforcements **19,** which, in particular embodiments, which may extend in a substantially radial direction of tire **10** as exemplarily shown in FIG. **1****.** Substantially means the difference between patch and tire reinforcements is no more than approximately 5-10 degrees. It is contemplated that patch **10** may be applied to tires having other tire reinforcement orientations (angles), and may, as such, be applied in other directions relative to the tire reinforcements.

In particular embodiments, patch **10** is applied to the damaged portion **12** so to cover and also overlap the perimeter of the damaged portion, such as is shown in an exemplary embodiment in FIG. **3****.** In particular embodiments, the lengthwise ends of the patch **10** (*i.e.,* the ends of the patch between which the lengths of the patch reinforcements extend) overlap the tire by approximately 50 mm or more. It is contemplated the use of such methods and patches discussed herein may be applied with any sized overlap, and, in particular embodiments, when only the lengthwise ends of the patch overlap the damaged portion (or tire).

Additional material, such as gum strip **28,** may be placed about the sides of reinforcement layer **26** to insulate layer **26** and/or to provide a more uniform patch thickness beyond the reinforcement layer **26.** With reference to the embodiments shown in FIGS. **7** and **8****,** side strips **28a** are applied to the sides of reinforcement layer **26,** while end strips **28b** are partially applied overtop the ends of reinforcement layer **26** for the purpose of achieving raised reinforcement ends. Raised reinforcement endings improve patch durability, as such endings become more isolated from the shear forces operating along tire reinforcements **19.** Gum strip **28** may comprise the same material used to form cover layer **24.** Finally, an adhesive layer is placed atop reinforcement layer **26,** as well as extending to the edges of barrier layer **22** to substantially cover patch **20** for the purpose of facilitating attachment of patch **20** to tire **10.** This is also shown in the step described in FIG. **9****.** Any available adhesive rubber may used. In operation, barrier layer **22,** cover layer **24,** reinforcement layer **26,** and gum strips **28** are pre-cured, and an uncured adhesive layer **30** is subsequently positioned along the cured assembly to provide patch **20.** In other embodiments, however, adhesive layer **30** may be applied during the cure of the patch to provide a patch **20** having a partially cured adhesive layer **30.** It is also contemplated, in other embodiments, that patch **20** may not include adhesive layer **30,** and as such would be applied to tire **10** without use of an adhesive layer **30.**

To facilitate a close relationship between patch reinforcements **26a** and tire reinforcements **19,** the thicknesses of patch reinforcement insulation **26b** and adhesion layer **30** are controlled. Patch reinforcement thickness is referred to a **T_{I}**, while adhesion layer thickness is referred to as **T_{A}**. As stated previously, the tire interior surface **16** is also buffed to a depth of **D_{B}** adjacent the perimeter of damaged portion **12,** for the purpose of facilitating a close association between patch and tire reinforcements. Accordingly, in buffing to a depth of **D_{B}**, a thickness of material may remain between tire reinforcements **19** and the buffed interior surface **16a,** which is referred to as **T_{O}**. Because it is desirous for patch reinforcements **26a** to be positioned a distance **D_{R}** from tire reinforcements **19** that is 3 mm or less, it follows that **D_{R}** = **T_{I}** + **T_{A}** + **T_{O}** ≤ 3 mm. In facilitating achievement of a 3 mm or less spacing, it is contemplated that in various embodiments the thickness of insulation **T_{I}** is between 0.3-0.6 mm, and the thickness of adhesive layer **T_{A}** is approximately 0.5 mm. Still, thicknesses **T_{I}**, **T_{A}**, and **T_{O}** may comprise any thickness so long as the sum of all is 3 mm or less. It follows that **T_{O}** may be approximately zero, which assumes that the interior tire surface **16** has been buffed to expose tire reinforcements **19,** or any other dimension less than 3 mm.

Upon installation, in particular embodiments, patch **20** may remain approximately flush with interior tire surface **16,** or may extend inwardly into the tire beyond the interior tire surface **16.** Accordingly, in particular embodiments, patch **20** (or interior tire patch surface **32**) extends approximately 3 mm or less beyond the interior surface **16** of the tire. In other embodiments, patch **20** extends approximately 2 mm or less beyond the interior surface **16** of the tire, and in other embodiments 1 mm or less.

To determine the improvements of the present invention, several tests were run. Specifically, tire durability tests were run, during which tires having been repaired with particular patch configurations were run at a constant speed of 100 kilometers per hour (Kph) while pressurized at 100 psi. Loads were also increase in 5% increments beginning at 85% of the maximum rate load of 2800 Kg. The tires used were 275/80R22.5 sized truck tires having a load range G. The damaged portion for each tire was located along the upper sidewall and was defined by a 25 mm wide by 70 mm high area. Four patch configurations were tested to determine the distance each repaired tire could travel prior to failure under the test conditions. The results were normalized against the results obtained for a conventional patch, the conventional patch having four polyester plies (layers) of reinforcements. All patches tested were aligned relative to the tire carcass reinforcements such that the patch reinforcements extended in substantially the same lengthwise direction as the tire carcass reinforcements, which extended in a radial direction of the tire (such as shown in FIG. **1**). The results were as follows. For a tire using an inventive patch having only steel patch reinforcements, the normalized distance traveled was 147% the distance obtained by a tire repaired with a conventional patch. For a tire utilizing an inventive patch having steel and nylon patch reinforcements, the normalized distance traveled was 170%. Finally, for a tire utilizing an inventive patch having only aramid patch reinforcements, the normalized distance traveled was 165%. It is readily ascertainable that the inventive patches at least provide approximately a 50% improvement over conventional tire repair patches.

While this invention has been described with reference to particular embodiments thereof, it shall be understood that such description is by way of illustration and not by way of limitation. Accordingly, the scope and content of the invention are to be defined only by the terms of the appended claims.

## Claims

1. A method of repairing a damaged portion (12) of a tire (10), the method comprising the steps of:
buffing an interior surface (16) of the tire (10) about a perimeter of the damaged tire portion (12) to form a patch receiving surface (16a), the interior surface (16) being buffed to a depth sufficient to place a plurality of patch reinforcements (26a, 26b) of a tire patch (20) a distance greater than 1 millimeter from any damaged tire reinforcement (19) of a plurality of damaged tire reinforcements, the patch reinforcements (26a, 26b) not more than approximately 3 millimeters from a corresponding nearest damaged tire reinforcement (19) of the plurality of damaged tire reinforcements, the plurality of damaged tire reinforcements arranged adjacent the patch receiving surface (16a);
covering the damaged portion (12) by applying the patch (20) to the patch receiving surface (16a) along the interior surface of the tire (10), the tire patch (20) being preassembled and sized to cover the damaged portion (12), such patch (20) including a patch reinforcement layer (26) interposed between an air-impermeable layer (22) and a tire-contacting surface (34) of the patch (20), the plurality of patch reinforcements (26a, 26b) being contained within the patch reinforcement layer (26) and being positioned such that each of the plurality of patch reinforcements is spaced the distance greater than 1 millimeter from any damaged tire reinforcement (19) of a plurality of damaged tire reinforcements, each patch reinforcement (26a, 26b) not more than approximately 3 millimeters from the corresponding nearest damaged tire reinforcement (19) when the patch (20) is applied to the patch receiving surface (16a),
wherein each of the plurality of patch reinforcements (26a, 26b)
having a high tensile modulus of at least approximately 10 GPa and the reinforcement layer (26) is a high tensile modulus layer having a minimum effective tensile modulus of 5 GPa, the patch (20) further including an adhesive layer (30) interposed between the tire-contacting surface and the reinforcement layer (26), the adhesive layer (30) at least partially forming a portion of the contacting surface (34); and,
curing the patch (20) to the tire (10).

2. The method of claim 1, wherein the distance is approximately 2 millimeters, and wherein the interior surface (16a) is buffed to a depth sufficient to place each of the plurality of tire patch reinforcements (26a, 26b) at the distance from the corresponding nearest damaged tire reinforcement (19) along the entire length of the plurality of damaged tire reinforcements.

3. The method of claim 1, wherein the high tensile modulus reinforcement (26a) is aramid or steel.

4. The method of claim 1, wherein the reinforcement layer (26) has a minimum effective tensile modulus of approximately 10 GPa.

5. The method of claim 1 further comprising:
a cover layer (24) interposed between the air-impermeable layer (22) and the reinforcement layer (26).

6. The method of claim 1, wherein one or more gum strips are applied about at least a portion of the perimeter of the reinforcement layer (26) between the reinforcement layer (26) and the contact surface (34) whereby an intermediate portion of the reinforcement layer (26) remains free of the one or more gum strips.

7. The method of claim 6, wherein the one or more gum strips are applied to opposing longitudinal ends of the reinforcement layer (26) forming the at least a portion of the perimeter.

8. The method of claim 7, wherein the one or more gum strips extend substantially about the perimeter of the reinforcement layer (26), whereby an intermediate portion of the reinforcement layer (26) remains free of the one or more gum strips.

9. The method of claim 6, wherein the one or more gum strips include two side strips applied about the patch reinforcement layer (26), wherein the side strips are oriented on edges of a longest dimension of the patch reinforcement layer (26), and two end strips applied about the patch reinforcement layer (26), wherein the end strips are oriented on edges of a shortest dimension of the patch reinforcement layer.

10. The method of claim 1 further comprising: a second reinforcement layer (27) having a plurality of nylon reinforcements.

11. The method of claim 1, wherein the interior surface is buffed to a depth to provide a thickness of tire material remaining between the plurality of damaged tire reinforcements (19) and the patch receiving surface (16a).

12. The method of claim 1, wherein the patch reinforcement layer (26) of the patch (20) extends beyond a width of the damaged portion (12).

13. The method of claim 1, wherein the plurality of reinforcements (20) are steel, the steel patch reinforcements being spaced in a lateral direction along the reinforcement layer (26) by an average of at least 8 ends per inch (per 2.54 cm) and being characterized as having a tensile modulus of at least approximately 120 GPa.

14. The method of claim 1, wherein the plurality of reinforcements (20) are aramid, the aramid patch reinforcements being spaced in a lateral direction along the reinforcement layer (26) by an average of at least 26 ends per inch (per 2.54 cm), the aramid patch reinforcements being characterized as having a tensile modulus of at least 20 GPa.

## Patentansprüche

1. Verfahren zum Reparieren eines beschädigten Abschnitts (12) eines Reifens (10), wobei das Verfahren die folgenden Schritte umfasst:
Aufrauen einer Innenfläche (16) des Reifens (10) um einen Umfang des beschädigten Reifenabschnitts (12), um eine Flicken aufnehmende Fläche (16a) zu bilden, wobei die Innenfläche (16) bis zu einer Tiefe aufgeraut wird, die ausreicht, um eine Vielzahl von Flickenverstärkungen (26a, 26b) eines Reifenflickens (20) in einem Abstand von mehr als 1 Millimeter von jeder beschädigten Reifenverstärkung (19) aus einer Vielzahl von beschädigten Reifenverstärkungen anzuordnen, wobei die Flickenverstärkungen (26a, 26b) nicht mehr als ungefähr 3 Millimeter von einer entsprechenden nächstgelegenen beschädigten Reifenverstärkung (19) aus der Vielzahl beschädigter Reifenverstärkungen entfernt sind, wobei die Vielzahl beschädigter Reifenverstärkungen neben der Flickenaufnahmefläche (16a) angeordnet ist;
Bedecken des beschädigten Abschnitts (12) durch Aufbringen des Flickens (20) auf die Flickenaufnahmefläche (16a) entlang der Innenfläche des Reifens (10), wobei der Reifenflicken (20) vormontiert und so bemessen ist, dass er den beschädigten Abschnitt (12) bedeckt, wobei ein solcher Flicken (20) eine Flickenverstärkungsschicht (26) umfasst, die zwischen einer luftundurchlässigen Schicht (22) und einer Reifenkontaktfläche (34) des Flickens (20) angeordnet ist, wobei die Vielzahl von Flickenverstärkungen (26a, 26b) in der Flickenverstärkungsschicht (26) enthalten ist und so positioniert ist, dass jede der mehreren Flickenverstärkungen im Abstand von mehr als 1 Millimeter von jeder beschädigten Reifenverstärkung (19) aus einer Vielzahl beschädigter Reifenverstärkungen angeordnet ist, wobei jede Flickenverstärkung (26a, 26b) nicht mehr als ungefähr 3 Millimeter von der entsprechenden nächstgelegenen beschädigten Reifenverstärkung (19) entfernt ist, wenn der Flicken (20) auf die den Flicken aufnehmende Fläche (16a) aufgebracht wird,
wobei jede der Vielzahl von Flickenverstärkungen (26a, 26b) einen hohen Zugfestigkeitsmodul von mindestens ungefähr 10 GPa aufweist und die Verstärkungsschicht (26) eine Schicht mit hohem Zugfestigkeitsmodul ist, die einen minimalen effektiven Zugfestigkeitsmodul von 5 GPa aufweist, wobei der Flicken (20) ferner eine Klebstoffschicht (30) umfasst, die zwischen der den Reifen kontaktierenden Oberfläche und der Verstärkungsschicht (26) angeordnet ist, wobei die Klebstoffschicht (30) zumindest teilweise einen Abschnitt der kontaktierenden Oberfläche (34) bildet; und
Vulkanisierung des Flickens (20) auf den Reifen (10).

2. Verfahren nach Anspruch 1, bei dem der Abstand etwa 2 Millimeter beträgt und bei dem die Innenfläche (16a) bis zu einer Tiefe aufgeraut wird, die ausreicht, um jede der mehreren Reifenflickenverstärkungen (26a, 26b) in dem Abstand von der entsprechenden nächstgelegenen beschädigten Reifenverstärkung (19) entlang der gesamten Länge der mehreren beschädigten Reifenverstärkungen anzuordnen.

3. Verfahren nach Anspruch 1, wobei die Verstärkung mit hohem Zugfestigkeitsmodul (26a) aus Aramid oder Stahl besteht.

4. Verfahren nach Anspruch 1, wobei die Verstärkungsschicht (26) einen effektiven Mindestzugfestigkeitsmodul von etwa 10 GPa aufweist.

5. Verfahren nach Anspruch 1, das ferner umfasst:
eine Deckschicht (24), die zwischen der luftundurchlässigen Schicht (22) und der Verstärkungsschicht (26) angeordnet ist.

6. Verfahren nach Anspruch 1, wobei ein oder mehrere Gummistreifen über mindestens einen Teil des Umfangs der Verstärkungsschicht (26) zwischen der Verstärkungsschicht (26) und der Kontaktfläche (34) aufgebracht werden, wodurch ein Zwischenabschnitt der Verstärkungsschicht (26) frei von dem einen oder den mehreren Gummistreifen bleibt.

7. Verfahren nach Anspruch 6, bei dem ein oder mehrere Gummistreifen auf gegenüberliegende Längsenden der Verstärkungsschicht (26), die mindestens einen Teil des Umfangs bildet, aufgebracht werden.

8. Verfahren nach Anspruch 7, wobei sich der eine oder die mehreren Gummistreifen im Wesentlichen um den Umfang der Verstärkungsschicht (26) erstrecken, wodurch ein Zwischenabschnitt der Verstärkungsschicht (26) frei von dem einen oder den mehreren Gummistreifen bleibt.

9. Verfahren nach Anspruch 6, wobei der eine oder die mehreren Gummistreifen zwei Seitenstreifen umfassen, die um die Flickenverstärkungsschicht (26) herum aufgebracht sind, wobei die Seitenstreifen an Kanten einer längsten Abmessung der Flickenverstärkungsschicht (26) orientiert sind, und zwei Endstreifen, die um die Flickenverstärkungsschicht (26) herum aufgebracht sind, wobei die Endstreifen an Kanten einer kürzesten Abmessung der Flickenverstärkungsschicht orientiert sind.

10. Verfahren nach Anspruch 1, ferner umfassend:
eine zweite Verstärkungsschicht (27) mit einer Vielzahl von Nylonverstärkungen.

11. Verfahren nach Anspruch 1, bei dem die Innenfläche bis zu einer Tiefe aufgeraut wird, um für eine Dicke des zwischen der Vielzahl von beschädigten Reifenverstärkungen (19) und der den Flicken empfangenden Fläche (16a) verbleibenden Materials des Reifens zu sorgen.

12. Verfahren nach Anspruch 1, wobei sich die Flickenverstärkungsschicht (26) des Flickens (20) über eine Breite des beschädigten Teils (12) hinaus erstreckt.

13. Verfahren nach Anspruch 1, bei dem die Mehrzahl von Verstärkungen (20) aus Stahl besteht, wobei die Stahlflickenverstärkungen in einer seitlichen Richtung entlang der Verstärkungsschicht (26) durch einen Durchschnitt von mindestens 8 Enden pro Zoll (pro 2,54 cm) beabstandet sind und **dadurch gekennzeichnet sind, dass** sie einen Zugfestigkeitsmodul von mindestens ungefähr 120 GPa aufweisen.

14. Verfahren nach Anspruch 1, wobei die mehreren Verstärkungen (20) Aramid sind, wobei die Aramidflickenverstärkungen in einer seitlichen Richtung entlang der Verstärkungsschicht (26) durch einen Durchschnitt von mindestens 26 Enden pro Zoll (pro 2,54 cm) beabstandet sind, wobei die Aramidflickenverstärkungen **dadurch gekennzeichnet sind, dass** sie einen Zugfestigkeitsmodul von mindestens 20 GPa aufweisen.

## Revendications

1. Procédé de réparation d'une portion endommagée (12) d'un pneu (10), le procédé comprenant les étapes de :
polissage d'une surface intérieure (16) du pneu (10) sur un périmètre de la portion de pneu endommagée (12) pour former une surface de réception (16a) de pastille, la surface intérieure (16) étant polie à une profondeur suffisante pour placer une pluralité de renforcements (26a, 26b) de pastille d'une pastille (20) de pneu à une distance supérieure à 1 millimètre de tout renforcement de pneu endommagé (19) d'une pluralité de renforcements de pneu endommagé, les renforcements (26a, 26b) de pastille n'étant pas à plus d'approximativement 3 millimètres d'un renforcement de pneu endommagé (19) le plus près correspondant de la pluralité de renforcements de pneu endommagé, la pluralité de renforcements de pneu endommagé étant agencée de manière adjacente à la surface de réception (16a) de pastille ;
couverture de la portion endommagée (12) par application de la pastille (20) à la surface de réception (16a) de pastille le long de la surface intérieure du pneu (10), la pastille (20) de pneu étant pré-assemblée et dimensionnée pour couvrir la portion endommagée (12), une telle pastille (20) incluant une couche de renforcement (26) de pastille interposée entre une couche imperméable à l'air (22) et une surface de contact (34) avec le pneu de la pastille (20), la pluralité de renforcements (26a, 26b) de pastille étant contenue dans la couche de renforcement (26) de pastille et étant positionnée de sorte que chacun de la pluralité de renforcements de pastille soit espacé de la distance supérieure à 1 millimètre de tout renforcement de pneu endommagé (19) d'une pluralité de renforcements de pneu endommagé, chaque renforcement (26a, 26b) de pastille n'étant pas à plus d'approximativement 3 millimètres du renforcement de pneu endommagé (19) le plus près correspondant lorsque la pastille (20) est appliquée à la surface de réception (16a) de pastille,
dans lequel chacun de la pluralité de renforcements (26a, 26b) de pastille
présente un module à haute résistance à la traction d'au moins approximativement 10 GPa et la couche de renforcement (26) est une couche de module à haute résistance à la traction présentant un module à résistance à la traction effective minimum de 5 GPa, la pastille (20) incluant en outre une couche adhésive (30) interposée entre la surface de contact avec le pneu et la couche de renforcement (26), la couche adhésive (30) formant au moins partiellement une portion de la surface de contact (34) ; et
durcit la pastille (20) sur le pneu (10).

2. Procédé selon la revendication 1, dans lequel la distance est approximativement de 2 millimètres, et dans lequel la surface intérieure (16a) est polie à une profondeur suffisante pour placer chacun de la pluralité de renforcements (26a, 26b) de pastille de pneu à la distance du renforcement de pneu endommagé (19) le plus près correspondant le long de la longueur entière de la pluralité de renforcements de pneu endommagé.

3. Procédé selon la revendication 1, dans lequel le renforcement (26a) de module à haute résistance à la traction est en aramide ou en acier.

4. Procédé selon la revendication 1, dans lequel la couche de renforcement (26) présente un module à résistance à la traction effective minimum d'approximativement 10 GPa.

5. Procédé selon la revendication 1, comprenant en outre :
une couche de couvercle (24) interposée entre la couche imperméable à l'air (22) et la couche de renforcement (26).

6. Procédé selon la revendication 1, dans lequel une ou plusieurs bandes de gomme sont appliquées sur au moins une portion du périmètre de la couche de renforcement (26) entre la couche de renforcement (26) et la surface de contact (34), moyennant quoi une portion intermédiaire de la couche de renforcement (26) reste exempte des une ou plusieurs bandes de gomme.

7. Procédé selon la revendication 6, dans lequel les une ou plusieurs bandes de gomme sont appliquées à des extrémités longitudinales opposées de la couche de renforcement (26) formant l'au moins une portion du périmètre.

8. Procédé selon la revendication 7, dans lequel les une ou plusieurs bandes de gomme s'étendent sensiblement sur le périmètre de la couche de renforcement (26), moyennant quoi une portion intermédiaire de la couche de renforcement (26) reste exempte des une ou plusieurs bandes de gomme.

9. Procédé selon la revendication 6, dans lequel les une ou plusieurs bandes de gomme incluent deux bandes latérales appliquées sur la couche de renforcement (26) de pastille, dans lequel les bandes latérales sont orientées sur des arêtes d'une dimension la plus longue de la couche de renforcement (26) de pastille, et deux bandes d'extrémité appliquées sur la couche de renforcement (26) de pastille, dans lequel les bandes d'extrémité sont orientées sur des arêtes d'une dimension la plus courte de la couche de renforcement de pastille.

10. Procédé selon la revendication 1, comprenant en outre :
une seconde couche de renforcement (27) présentant une pluralité de renforcements en nylon.

11. Procédé selon la revendication 1, dans lequel la surface intérieure est polie à une profondeur pour fournir une épaisseur de matériau de pneu restant entre la pluralité de renforcements de pneu endommagé (19) et la surface de réception (16a) de pastille.

12. Procédé selon la revendication 1, dans lequel la couche de renforcement (26) de pastille de la pastille (20) s'étend au-delà d'une largeur de la portion endommagée (12).

13. Procédé selon la revendication 1, dans lequel la pluralité de renforcements (20) est en acier, les renforcements de pastille en acier étant espacés dans une direction latérale le long de la couche de renforcement (26) d'une moyenne d'au moins 8 extrémités par pouce (par 2,54 cm) et étant caractérisés comme présentant un module à résistance à la traction d'au moins approximativement 120 GPa.

14. Procédé selon la revendication 1, dans lequel la pluralité de renforcements (20) est en aramide, les renforcements de pastille en aramide étant espacés dans une direction latérale le long de la couche de renforcement (26) d'une moyenne d'au moins 26 extrémités par pouce (par 2,54 cm), les renforcements de pastille en aramide étant caractérisés comme présentant un module à résistance à la traction d'au moins 20 GPa.
